# EUROPEAN PATENT SPECIFICATION

(11) **EP 3 240 621 B1**
(45) Date of publication and mention of the grant of the patent: **22.07.2020**
(21) Application number: 15828343.2
(22) Date of filing: 29.12.2015
(51) Int. Cl.: B01D 53/24, B01D 53/26, C01B 17/02

(54) **DEWATERING OF SULPHUR**
SCHWEFELENTWÄSSERUNG
DÉSHYDRATATION DE SOUFRE

(30) Priority: 30.12.2014 FI 20146167
(43) Date of publication of application: 08.11.2017
(73) Proprietor: Outotec (Finland) Oy, 02230 Espoo (FI)
(72) Inventor: VANHATALO, Aki, 27230 Lappi (FI)
(74) Representative: Laine IP Oy
(86) International application number: PCT/FI2015/050952
(87) International publication number: WO 2016/107986

(56) References cited:
- EP-A2- 2 644 253
- GB-A- 737 532
- US-A- 2 386 390
- US-A- 2 687 344
- US-A- 4 014 981
- US-A- 4 092 130
- US-A- 4 286 966
- US-A- 4 859 347
- US-A1- 2003 221 558

## Description

### TECHNICAL FIELD

The exemplary and non-limiting embodiments relate generally to dewatering of sulphur.

### BACKGROUND ART

Cyclonic separation may be used to remove particulates from air, gas or liquid streams, without the use of filters, through vortex separation. Cyclonic separation utilizes rotational effects and gravity to separate mixtures of solids and fluids. Cyclonic separation may also be used to separate fine droplets of liquid from a gaseous stream. A high speed rotating gas flow is established within a cylindrical or conical container which may be referred to as a cyclone. Gas flows in a helical pattern, beginning at the top (wide end) of the cyclone and ending at the bottom (narrow) end before exiting the cyclone in a straight stream via the top center part of the cyclone. Larger (denser) particles in the rotating stream have too much inertia to follow the tight curve of the gas stream, so they strike the outside wall, and then travel to the bottom of the cyclone where they may be collected. In a conical cyclone, as the rotating flow moves towards the narrow end of the cyclone, the rotational radius of the stream is reduced, thus separating smaller and smaller particles.

Elemental sulphur fractions may include excessive moisture. Purification/scrubbing of elemental sulphur fractions is a challenge in the industry.

US 4 286 966 A discloses a method for dewatering streams of liquid sulphur, wherein a liquid mixture containing molten sulphur and water is fed to a cyclone to obtain molten sulphur rich fractions substantially free of moisture. US 2 386 390 A relates to a method for dewatering of gaseous mixtures of sulphur and water vapour by scrubbing with liquid sulphur.

### SUMMARY

An object is thus to provide a method so as to alleviate the above disadvantage. The objects are achieved by a method which is characterized by what is stated in the independent claim. Preferred embodiments are disclosed in the dependent claims.

In an aspect, a method is provided for dewatering of sulphur, the process comprising feeding a gaseous mixture at an elevated temperature into a cyclone, the gaseous mixture containing sulphur gas and water vapour; and performing cyclonic separation of sulphur gas and water vapour contained in the gaseous mixture, such that a sulphur gas rich fraction is obtained via a spigot opening of the cyclone, and a water vapour rich fraction is obtained via a vortex finder of the cyclone. Also disclosed is a system for dewatering of sulphur, the system comprising at least one cyclone configured to receive a gaseous mixture fed into the cyclone at an elevated temperature, the gaseous mixture containing sulphur gas and water vapour, wherein the at least one cyclone is configured to perform cyclonic separation of sulphur gas and water vapour contained in the gaseous mixture, such that a sulphur gas rich fraction is obtained via a spigot opening of the cyclone, and a water vapour rich fraction is obtained via a vortex finder of the cyclone.

An advantage is that excessive moisture may be removed from sulphur gas, thus facilitating the reuse of sulphur.

### BRIEF DESCRIPTION OF THE DRAWINGS

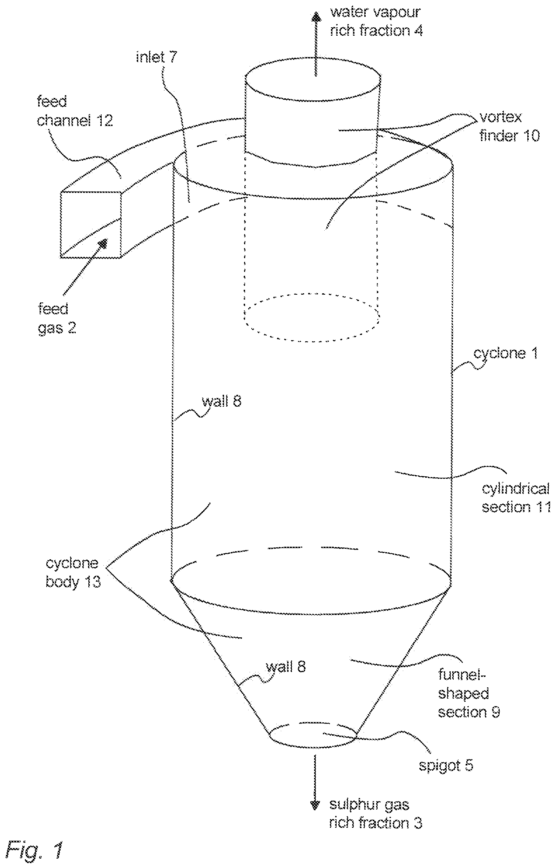

In the following the solution will be described in greater detail with reference to the attached drawing, in which
Figure 1 illustrates a cyclone system for performing a process according to an embodiment.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All words and expressions should be interpreted broadly and they are intended to illustrate, not to restrict, the embodiment.

In an embodiment, purification of sulphur fractions is carried out by means of an evaporation process. In the evaporation process, water and sulphur are both evaporated, and water vapour is separated in gas phase from sulphur gas.

Sulphur gas at a temperature of 450 °C includes sulphur molecules and has a mass distribution of about 48% of S₆, 15% of S₇, 14% of S₅, and 1% of S. The average molecular mass of the sulphur molecules is about 187 g/mol. In comparison, the molecular mass of water is only 18.016 g/mol. If the behavior of the gases is close to that of an ideal gas, the sulphur molecules have about ten times as high density as water vapour (in reality, sulphur gas differs more from ideal gas than water vapour does, and thus the relative density of sulphur gas is even greater). In a cyclone under heavy centrifugal forces, dense material (sulphur) ends up on the sides of the cyclone and light material (water) in the middle of the cyclone.

In an embodiment, a process for recovering (dewatering) of sulphur comprises feeding, at an elevated temperature (e.g. 450 °C), a gaseous mixture containing sulphur gas and water vapour, into a cyclone. The gaseous mixture may also contain a small amount of SO₂ and/or H₂S, due to the chemical equilibrium of a reaction: 3 S + 2 H₂O ⇄ SO₂ + 2 H₂S. A cyclonic separation of sulphur gas and water vapour contained in the gaseous mixture is performed. The cyclonic separation involves obtaining a sulphur gas rich fraction via an opening in the funnel-shaped part of the cyclone and a water vapour rich fraction via an outlet pipe of the cyclone. The separation may be partial, thus the obtained sulphur gas rich fraction may contain some water vapour, and the obtained water vapour rich fraction may contain some sulphur gas.

Figure 1 illustrates a cyclone system for performing a process according to an embodiment. The system comprises at least one cyclone 1 comprising a cylindrical section 11, and a funnel-shaped section 9 on one end of the cylindrical section 11. The cyclone 1 is configured to receive, via an inlet 7, a gaseous mixture 2 (i.e. feed gas 2) of sulphur gas and water vapour. The cyclone 1 is configured to perform cyclonic separation such that a sulphur gas rich fraction 3 is obtainable via an outlet 5 (i.e. spigot 5) in the funnel-shaped part of the cyclone 1, and a water vapour rich fraction 4 is obtainable via an outlet pipe 10 (i.e. vortex finder 10) on the other end of the cyclone 1. A high speed rotating gas flow is established within a cyclone body 13. Gas flows in a helical pattern, beginning at the "top" of the cyclone and ending at the "bottom end", after which lighter gas exits the cyclone in a straight stream and/or central turbulence via the outlet pipe 10 (i.e. the vortex finder 10) of the cyclone 1. Denser gas in the rotating stream has too much inertia to follow the tight curve of the gas stream, so denser gas strikes the wall 8, and flows to the "bottom" of the cyclone 1 and exits the cyclone 1 via the spigot 5 in the funnel-shaped part 9 (at the tip of the cone of the funnel-shaped part 9).

Various types of cyclones may be used. For example, the cyclone may comprise a tangential, evolvent (i.e. involute), partly evolvent (i.e. partial involute) or axial feed channel, wherein the inlet 7 respectively enables a tangential, evolvent, partly evolvent or axial feed of the gaseous mixture into the cyclone. The inlet 7 may involve a hole (having, for example, a height of 1D or less, and a width of 0.5D or less, where D=the diameter of the cylindrical section 11 of the cyclone) in the cylindrical section 11. The hole may be a rectangular hole or a hole of any other shape. The height of the cylindrical section may be 1D to 2D, for example. The outlet pipe 10 involves a pipe-like element 10 attached to the cylindrical section 11, wherein the pipe-like element 10 extends from the inside of the cylindrical section 11 (below the inlet 7) to the outside of the cylindrical section 11. The pipe-like element 10 may also be referred to as a vortex finder 10. The height of the funnel 9 (also other shapes may be used instead of a funnel) may be 2D to 3D, for example. The gas is expanded inside the cyclone 1, so the together added cross-sectional area of the vortex finder 10 and the opening 5 (also referred to as a spigot 5) may be larger than the cross-sectional area of the inlet 7. The cross-sectional area of the spigot 5 may or may not be larger than the cross-sectional area of the vortex finder 10, depending on the feed gas composition and counterpressures used at the outlets 5, 10.

The gas flow fed into the cyclone 1 may be laminar flow with no or little turbulence. The cyclone system comprises a feed channel 12 (having a length of 0.5 m, for example) within which the pressure of the gas decreases, and a fast flow of the gas is achieved (the pressure decrease accelerates the gas). The feed channel 12 is evolvently connected to the cylindrical section 11 of the cyclone 1 (alternatively, the feed channel 12 is tangentially, axially or partly evolvently connected to the cylindrical section 11). The cyclone 1 comprises a vortex finder 10 configured to collect lighter gas and prevent short circuiting. The cyclone body 13 comprises a cylindrical section 11 and a funnel-shaped section 9. At the tip of the funnel-shaped section 9 there is a spigot opening 5 via which the heavier material exits the cyclone 1.

Typically two separate vortexes are formed within the cyclone. An outer vortex appears near the cyclone walls 8, and an inner vortex appears in the center of cyclone 1. The vortex finder 10 "finds" the inner (i.e. central) vortex and discards the material in the inner vortex from the cyclone 1 (via the vortex finder 10).

At first, the vortex finder 10 forces the gas flow towards the spigot opening 5, thus causing initial movement of the gas towards the funnel-shaped section 9 (i.e. towards the lower pressure near the spigot opening 5).

Thus, in an embodiment, a water vapour rich fraction 4 may be extracted via the vortex finder 10 of the cyclone 1, and a sulphur gas rich fraction 3 ends up on the wall 8 of the cyclone 1 and may be collected via the spigot opening 5. The feed gas 2/the obtained sulphur gas rich fraction 3 may also contain H₂S and/or SO₂. H₂S is only twice as dense as water vapour, so a significant amount of H₂S may end up in the water vapour rich fraction 4. SO₂ is almost four times as dense as water vapour, but still a significant amount of SO₂ may end up in the water vapour rich fraction 4.

In an embodiment, the "top" part of the cyclone 1 may include several concentric exit ports (outlet pipes (vortex finders)) dedicated for light gas fractions (such as H₂O, H₂S, SO₂) (not shown in Figure 1). Thus lighter gases (such as H₂O, H₂S, SO₂) may be at least partly separated from each other by means of the dedicated outlet pipes.

In an embodiment, a plurality of cyclones are used in series, wherein the separation of the fractions may be enhanced by using the plurality of cyclones in series. In that case the sulphur gas rich fraction (and/or the water vapour rich fraction) obtained from a first cyclone is used as the gaseous mixture to be fed in a second cyclone in the cyclone system.

In an embodiment, a plurality of cyclones is used in parallel to increase the capacity of the cyclone system.

For example, a cyclone diameter of 2 cm with a 3 mm high inlet 7 may be used to accomplish a sufficient separation of the gases. Outlet sizes and counterpressures may be based on a desired cutting range. For generating a rotational speed, an increased pressure of the feed gas 2 may be required for a pressure gradient. For example, a feed pressure range of 0.5 bar to 20 bar, preferably 3 bar to 10 bar, more preferably 3 bar to 6 bar, may be used.

In the cyclone, sulphur gas may have an average density of about 14 g/l, water vapour may have a density of about 1.4 g/l, SO₂ may have a density of about 5 g/l, and H₂S may have a density of about 2.5 g/l. High centrifugal acceleration in the cyclone is able to overcome the mixing induced by heat energy and separate the gases by density.

Gas may also be seen as individual molecules each of which have the volume at the same temperature and pressure. In the cyclone 1, a centrifugal force affects the molecules. Acceleration caused by the centrifugal force may be calculated by a formula a=v²/r, where a=acceleration, v=tangential velocity of mass, and r=distance of mass from pivot. With an inlet speed of 250 m/s (gas mixture 2 fed tangentially relative to the edge (i.e. wall 8) of the cyclone 1) and with the largest radius r=0.01 m, an acceleration of 625 000 m/s² is obtained. In the cyclone 1, denser gas is pressed towards the edges 8 of the cyclone 1 and out of the cyclone 1 through the spigot opening 5. Lighter gas ends up in the center of the cyclone 1 and exits the cyclone 1 via the vortex finder 10.

A higher tangential velocity and a relatively small diameter of the cyclone may increase the segregation level of the centrifugation process of the gases, due to the increased acceleration. For example, a cyclone diameter of 2 cm to 10 cm and a feed pressure of 10 bar may be used. A part of the pressure is used for obtaining the desired velocity (such as a tangential velocity of 250 m/s). In an industrial scale process, a large amount of parallel cyclones may be used in order to be able to process large amounts of sulphur gas 3. A higher segregation level may be obtained with a 2 cm diameter cyclone compared to a 10 cm diameter cyclone. A pressure of 10 bar or less is more suitable for industrial scale processes as it is easier to produce, lower temperatures may be used (there is no risk of sulphur condensation), and less energy is consumed for compression. However, a pressure of above or below 10 bar may also be used.

The obtained water vapour rich fraction 4 may contain lighter sulphur gas molecules. If the water vapour rich fraction 4 is let to obtain gas balance, the lighter sulphur gas molecules react by forming heavier sulphur gas molecules, wherein they may be separated from the water vapour by multiple cyclones connected in series. If the water vapour rich fraction 4 is not let to obtain the gas balance before feeding it to the next cyclone, separation of sulphur gas from water vapour is still obtained but with a decreased efficiency.

In an embodiment, the size (i.e. diameter, height, width) of the outlets 5, 10 and the inlet 7 in the cyclone 1 may be selected based on the characteristics of the feed gas 2 (e.g. on the relative amounts of different molecules (H₂O, S₈, H₂S, SO₂, etc.) in the feed gas 2).

In an embodiment, the counterpressures of the outlets 5, 10 in the cyclone 1 may be adjusted based on the characteristics of the feed gas 2 (e.g. on the relative amounts of different molecules (H₂O, S₈, H₂S, SO₂, etc.) in the feed gas 2).

Thus, in an embodiment, a sulphur gas/water vapour stream 2 may be separated into a sulphur gas rich stream 3 and a water vapour rich stream 4. This is advantageous especially if the process subsequently using the obtained sulphur gas rich stream 3 is not able to cope with excessive moisture.

A feed gas temperature is used which is above the sulphur condensation temperature (so that no sulphur is condensated) but preferably close to the sulphur condensation temperature. The temperature may selected based on the partial pressure of sulphur in the feed gas and the total pressure of the gaseous mixture. For example, with a partial pressure of sulphur of about 4 bar, a temperature of about 630 °C may be used. With a 20 bar partial pressure of sulphur, the temperature may be even higher. A typical partial pressure of sulphur may be 2 bar, wherein a temperature of about 530 °C may be sufficient. With high water vapour content and/or low feed pressure, 450 °C or even a lower temperature may be sufficient.

In an embodiment, a vertical cyclone, horizontal cyclone or any other type of cyclone may be used.

The following example is to illustrate an embodiment, not to limit it. Assuming a feed gas stream, at temperature of 520 °C, that contains, for example, 30 kg/h sulphur gas, 7 kg/h of water vapour, 3 kg/h of SO₂ and 0.3 kg/h H₂S; in an atmospheric pressure, at temperature of 520 °C, these have the volumes of: 10 m³/h of sulphur gas, 20 m³/h of water vapour, 3 m³/h of SO₂ and 0.4 m³/h of H₂S. When pressurized to an absolute pressure of 5 bar for the cyclone, the total volume may be reduced to 7 m³/h. A straight feed channel with cross-sections of 4 mm by 8 mm may increase the speed of the gas by reducing the pressure, and feed the cyclone through an evolvent feed port (inlet 7). The cyclone may have a diameter of 2 cm. The water vapour rich coming out of the cyclone may contain 3 kg/h of sulphur gas, 5 kg/h of water vapour, 1 kg/h of SO₂ and 0.2 kg/h H₂S; and the sulphur gas rich fraction coming out of the cyclone may contain 27 kg/h of sulphur gas, 2 kg/h of water vapour, 2 kg/h of SO₂ and 0.1 kg/h H₂S. Thus, the molar water-sulphur ratio may drop from 0.41 to 0.13.

It will be obvious to a person skilled in the art that, as the technology advances, the inventive concept can be implemented in various ways. The embodiments are not limited to the examples described above but may vary within the scope of the claims.

## Claims

1. A process for dewatering of sulphur, the process comprising feeding a gaseous mixture (2) at an elevated temperature into a cyclone (1), the gaseous mixture (2) containing sulphur gas and water vapour; and
performing cyclonic separation of sulphur gas and water vapour contained in the gaseous mixture (2), such that
- a sulphur gas rich fraction (3) is obtained via a spigot opening (5) of the cyclone (1), and
- a water vapour rich fraction (4) is obtained via a vortex finder (10) of the cyclone (1),
wherein said elevated temperature is above the condensation temperature of sulphur gas.

2. A process according to claim 1, wherein the sulphur gas rich fraction (3) is obtained via a funnel-shaped section (9) of the cyclone (1).

3. A process according to claim 1 or 2, wherein said elevated temperature is 450 °C to 630 °C.

4. A process according to claim 1, 2 or 3, wherein the water vapour rich fraction (4) and/or the sulphur gas rich fraction (3) further contains H₂S and/or SO₂.

5. A process according to any of claims 1 to 4, wherein the process comprises using a plurality of cyclones in series and/or parallel.

6. A process according to any of claims 1 to 5, wherein the process comprises using a plurality of cyclones in series, wherein the sulphur gas rich fraction and/or the water vapour rich fraction obtained from a first cyclone is used as the gaseous mixture (2) to be fed in a second cyclone.

7. A process according to any of claims 1 to 6, wherein the cyclone (1) includes a plurality of concentric vortex finders, each of the plurality of concentric vortex finders being dedicated for a specific light gas fraction to be separated.

8. A process according to any of claims 1 to 7, wherein a cylindrical section of the cyclone has a diameter of below 20 cm, preferably 2 cm.

9. A process according to any of claims 1 to 8, wherein the gaseous mixture (2) is fed into the cyclone via an evolvent feed channel, partly evolvent feed channel, tangential feed channel or axial feed channel.

10. A process according to any of claims 1 to 9, wherein the gaseous mixture (2) is fed into the cyclone via an inlet having a height of 1D or less and a width of to 0.5D or less, wherein D is the diameter of a cylindrical section of the cyclone.

11. A process according to any of claims 1 to 10, wherein the process comprises using a feed pressure of the gaseous mixture into the cyclone of 0.5 bar to 20 bar, preferably 3 bar to 6 bar.

## Patentansprüche

1. Verfahren zum Entwässern von Schwefel, wobei das Verfahren Zuführen eines Gasgemischs (2) mit einer erhöhten Temperatur in einen Zyklon (1) umfasst, wobei das Gasgemisch (2) Schwefelgas und Wasserdampf enthält; und
Vornehmen von Zyklonabscheidung von im Gasgemisch (2) enthaltenem Schwefelgas und Wasserdampf, so dass
- eine Schwefelgas-reiche Fraktion (3) über eine Hahnöffnung (5) des Zyklons (1) erhalten wird, und
- eine Wasserdampf-reiche Fraktion (4) über einen Wirbelsucher (10) des Zyklons (1) erhalten wird,
wobei die erhöhte Temperatur über der Kondensationstemperatur von Schwefelgas liegt.

2. Verfahren nach Anspruch 1, wobei die Schwefelgas-reiche Fraktion (3) über einen trichterförmigen Abschnitt (9) des Zyklons (1) erhalten wird.

3. Verfahren nach Anspruch 1 oder 2, wobei die erhöhte Temperatur 450 °C bis 630 °C beträgt.

4. Verfahren nach Anspruch 1, 2 oder 3, wobei die Wasserdampf-reiche Fraktion (4) und/oder die Schwefelgas-reiche Fraktion (3) weiter H₂S und/oder SO₂ enthält.

5. Verfahren nach einem der Ansprüche 1 bis 4, wobei das Verfahren Verwenden einer Vielzahl von Zyklonen in Serie und/oder parallel umfasst.

6. Verfahren nach einem der Ansprüche 1 bis 5, wobei das Verfahren Verwenden einer Vielzahl von Zyklonen in Serie umfasst, wobei die Schwefelgas-reiche Fraktion und/oder die Wasserdampf-reiche Fraktion, die von einem ersten Zyklon erhalten wird, als das Gasgemisch (2) verwendet wird, das in einen zweiten Zyklon zugeführt wird.

7. Verfahren nach einem der Ansprüche 1 bis 6, wobei der Zyklon (1) eine Vielzahl von konzentrischen Wirbelsuchern einschließt, wobei die Vielzahl von konzentrischen Wirbelsuchern zum Abscheiden einer bestimmten Leichtgasfraktion verwendet wird.

8. Verfahren nach einem der Ansprüche 1 bis 7, wobei ein zylinderförmiger Abschnitt des Zyklons einen Durchmesser von unter 20 cm, vorzugsweise 2 cm aufweist.

9. Verfahren nach einem der Ansprüche 1 bis 8, wobei das Gasgemisch (2) in den Zyklon über einen einhüllenden Zufuhrkanal, teilweise einhüllenden Zufuhrkanal, tangentialen Zufuhrkanal oder axialen Zufuhrkanal zugeführt wird.

10. Verfahren nach einem der Ansprüche 1 bis 9, wobei das Gasgemisch (2) in den Zyklon über einen Einlass zugeführt wird, der eine Höhe von 1 D oder weniger und eine Breite von 0.5 D oder weniger aufweist, wobei D der Durchmesser des zylinderförmigen Abschnitts des Zyklons ist.

11. Verfahren nach einem der Ansprüche 1 bis 10, wobei das Verfahren Verwenden eines Zufuhrdrucks des Gasgemischs in den Zyklon von 0.5 bar bis 20 bar, vorzugsweise 3 bar bis 6 bar umfasst.

## Revendications

1. Processus de déshydratation de soufre, le processus comprenant
l'amenée d'un mélange gazeux (2) à une température élevée dans un cyclone (1), le mélange gazeux (2) contenant du gaz de soufre et de la vapeur d'eau ; et
la réalisation de la séparation cyclonique du gaz de soufre et du vapeur d'eau contenus dans le mélange gazeux (2) de sorte que
- une fraction riche en gaz de soufre (3) soit obtenue via une ouverture de robinet (5) du cyclone (1), et
- une fraction riche en vapeur d'eau (4) soit obtenue via un détecteur de tourbillon (10) du cyclone (1),
dans lequel ladite température élevée est supérieure à la température de condensation du gaz de soufre.

2. Processus selon la revendication 1, dans lequel la fraction riche en gaz de soufre (3) est obtenue via une section en forme d'entonnoir (9) du cyclone (1).

3. Processus selon la revendication 1 ou 2, dans lequel ladite température élevée est comprise entre 450 °C et 630 °C.

4. Processus selon la revendication 1, 2 ou 3, dans lequel la fraction riche en vapeur d'eau (4) et/ou la fraction riche en gaz de soufre (3) contient en outre du H₂S et/ou SO₂.

5. Processus selon l'une quelconque des revendications 1 à 4, dans lequel le processus comprend l'utilisation d'une pluralité de cyclones en série et/ou parallèle.

6. Processus selon l'une quelconque des revendications 1 à 5, dans lequel le processus comprend l'utilisation d'une pluralité de cyclones en série, dans lequel la fraction riche en gaz de soufre et/ou la fraction riche en vapeur d'eau obtenues à partir d'un premier cyclone est utilisée comme le mélange gazeux (2) à amener dans un second cyclone.

7. Processus selon l'une quelconque des revendications 1 à 6, dans lequel le cyclone (1) inclut une pluralité de détecteurs de tourbillon concentrique, chacun de la pluralité de détecteurs de tourbillon concentrique étant destiné à la séparation d'une fraction de gaz léger spécifique.

8. Processus selon l'une quelconque des revendications 1 à 7, dans lequel une section cylindrique du cyclone présente un diamètre inférieur à 20 cm, de préférence 2 cm.

9. Processus selon l'une quelconque des revendications 1 à 8, dans lequel le mélange gazeux (2) est amené dans le cyclone via un canal d'alimentation en développante, un canal d'alimentation partiellement en développante, un canal d'alimentation tangentielle ou un canal d'alimentation axiale.

10. Processus selon l'une quelconque des revendications 1 à 9, dans lequel le mélange gazeux (2) est amené dans le cyclone via une entrée présentant une hauteur de 1 D ou moins et une largeur jusqu'à 0,5 D ou moins, dans lequel D est le diamètre d'une section cylindrique du cyclone.

11. Processus selon l'une quelconque des revendications 1 à 10, dans lequel le processus comprend l'utilisation d'une pression d'amenée du mélange gazeux dans le cyclone de 0,5 bar à 20 bars, de préférence de 3 bars à 6 bars.
